(19) Europäisches Patentamt / European Patent Office / Office européen des brevets

(11) **EP 3 078 154 B1**

(12) **EUROPEAN PATENT SPECIFICATION**

(45) Date of publication and mention
of the grant of the patent:
**19.09.2018 Bulletin 2018/38**

(21) Application number: **14799778.7**

(22) Date of filing: **19.11.2014**

(51) Int Cl.:
*H04L 9/00* (2006.01)     *H04L 9/06* (2006.01)
*G06F 21/14* (2013.01)

(86) International application number:
**PCT/EP2014/074952**

(87) International publication number:
**WO 2015/082212 (11.06.2015 Gazette 2015/23)**

(54) **A COMPUTING DEVICE FOR ITERATIVE APPLICATION OF TABLE NETWORKS**

BERECHNUNGSVORRICHTUNG FÜR ITERATIVE ANWENDUNG VON TISCHNETZWERKEN

DISPOSITIF DE CALCUL POUR APPLICATION ITÉRATIVE DE RÉSEAUX DE TABLE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **05.12.2013 EP 13195809**

(43) Date of publication of application:
**12.10.2016 Bulletin 2016/41**

(73) Proprietor: **Koninklijke Philips N.V.**
**5656 AE Eindhoven (NL)**

(72) Inventors:
- **BRUEKERS, Alphons Antonius Maria Lambertus**
**NL-5656 AE Eindhoven (NL)**
- **GORISSEN, Paulus Mathias Hubertus Mechtildis Antonius**
**NL-5656 AE Eindhoven (NL)**
- **TOLHUIZEN, Ludovicus Marinus Gerardus Maria**
**NL-5656 AE Eindhoven (NL)**
- **SCHEPERS, Hendrik Jan Jozef Hubertus**
**NL-5656 AE Eindhoven (NL)**
- **PESTRIN, Alan**
**NL-5656 AE Eindhoven (NL)**
- **DENG, Mina**
**NL-5656 AE Eindhoven (NL)**

(74) Representative: **Coops, Peter**
**Philips Intellectual Property & Standards**
**High Tech Campus 5**
**5656 AE Eindhoven (NL)**

(56) References cited:
WO-A1-2013/139380    WO-A1-2014/095772
WO-A1-2014/096117    US-A1- 2010 303 231
US-A1- 2012 300 922    US-B2- 8 161 463

- **RAMESH KARRI ET AL: "Concurrent Error Detection Schemes for Fault-Based Side-Channel Cryptanalysis of Symmetric Block Ciphers", IEEE TRANSACTIONS ON COMPUTER AIDED DESIGN OF INTEGRATED CIRCUITS AND SYSTEMS, IEEE SERVICE CENTER, PISCATAWAY, NJ, US, vol. 21, no. 12, 1 December 2002 (2002-12-01), XP011070666, ISSN: 0278-0070**

**Description**

FIELD OF THE INVENTION

The invention relates to a computing device comprising an electronic storage and an electronic processor coupled to the storage, the storage storing table networks, the processor being configured to compute a function by applying the table networks.

The invention further relates to a method of computing, a compiler, and corresponding computer programs.

BACKGROUND

In traditional cryptography it was typically assumed that an attacker only gains access to the input and output values of a secure system. For example, the attacker would be able to observe a plain text going into a system and observe an encrypted text going out of the system. Although an attacker could try to gain an advantage by analyzing such input/output pairs, possibly even using computationally intense methods, he was not thought to have direct access to the system that implemented the input/output behavior.

Recently, it has become necessary to take threat models into account in which it is assumed that an attacker has some knowledge of the implementations. For example, one may consider the threat of side-channel analysis and of reverse engineering. Furthermore, the concerns that previously were mostly associated with security problems have extended to other fields, such as privacy. Although cryptographic systems processing security information such as cryptographic keys remain a prime concern, protection of other programs, e.g., those processing privacy relevant information has also become important.

It has long been known that computer systems leak some information through so-called side-channels. Observing the input-output behavior of a computer system may not provide any useful information on sensitive information, such as secret keys used by the computer system. But a computer system has other channels that may be observed, e.g., its power consumption or electromagnetic radiation; these channels are referred to as side-channels. For example, small variations in the power consumed by different instructions and variations in power consumed while executing instructions may be measured. The measured variation may be correlated to sensitive information, such as cryptographic keys. This additional information on secret information, beyond the observable and intended input-output behavior is termed a side-channel. Through a side-channel a computer system may 'leak' secret information during its use. Observing and analyzing a side-channel may give an attacker access to better information than may be obtained from cryptanalysis of input-output behavior only. One known type of side-channel attack is the so-called differential power analysis (DPA).

Current approaches to the side-channel problem introduce randomness in the computation. For example, in between genuine operations that execute the program dummy instructions may be inserted to blur the relationship between power consumption and the data the program is working on.

An even stronger attack on a computer is so called reverse engineering. In many security scenarios attackers may have full access to the computer. This gives them the opportunity to disassemble the program and obtain any information about the computer and program. Given enough effort any key hidden say in a program may be found by an attacker.

Protecting against this attack scenario has proven very difficult. One type of counter measure is so-called white-box cryptography. In white-box cryptography, the key and algorithm are combined. The resulting algorithm only works for one particular key. Next the algorithm may be implemented as a so-called, lookup table network. Computations are transformed into a series of lookups in key-dependent tables. See for example, "White-Box Cryptography and an AES Implementation", by S. Chow, P. Eisen, H. Johnson, P.C. van Oorschot, for an example of this approach.

US 8161463B2, by H. Johnson, discloses the use of functions that deal with encoding of the data using additional information.

US 2012/300922 A1, by O. Billet, et.al., discloses a method of encrypting an input datum into an output datum, by applying a coding function to a first subsidiary datum and to an encrypted intermediate datum obtained by applying a cryptographic function to the input datum.

R. Karri et. al. disclose in "Concurrent Error Detection Schemes for Fault-Based Side-Channel Cryptanalysis of Symmetric Block Ciphers", IEEE Transaction on Computer Aided Design of Integrated Circuits and Systems, 2002, a hardware-based countermeasure involving a status regarding faults.

SUMMARY OF THE INVENTION

The known countermeasures against side-channel attacks against computer systems are not entirely satisfactory. For example, the introduction of randomness may countered by statistical analysis. The obfuscation of software may be countered by more advanced analysis of the operation of the program. There is thus a need for more and better countermeasures.

It has been found that this problem is addressed by the introduction of table networks that operate on multiple input values at the same time. The table network may apply a different function to different inputs or groups of inputs. Using an encoding which encrypts into a single value two or more of the multiple inputs together into a single value, it becomes impossible for an attacker to determine for what function the table network is intended since, indeed, it performs two functions. See the US provisional application with number US 61/740,691, and title "Computing device comprising a table network" filed on 21-Dec-2012, and/or the European patent application of the same title "Computing device comprising a table network", with filing date in 27-Dec-2012 and file number EP12199387.

Although this system adds considerably to the security, there remains a vector of attack, especially if the attack model is widened further. We assume not only that an attacker has full access so that he may observe everything that happens in the system, we also prepare for an attacker who is able to modify the program. We consider two such modifications, modification to table entries and modification to variables. The first type of modification assumes less on the attacker since the modification could be made before program execution has started; the latter type of modification is done while the program is running and is therefore considered harder. For example, an attacker may try the following attack (most likely in an automated fashion). He modifies an entry in a table and runs the modified program for a variety of inputs. If none of the runs show any difference in the output of the original program and the modified program, he concludes that the modified table entry and the unmodified table entry are equal insofar relevant data is concerned and only differ in obfuscating computations, i.e., the so called state variables and state functions. Given sufficient time a map may be built up of classes of values that are equal insofar correct computation is concerned. Effectively, the state variable is thus eliminated. To be clear, because of encoding the attacker will not be able to observe directly if the data values are the same while state values are different, but he may be able to deduce this from analyzing the effect of table modifications.

It would be advantageous to have a computing device configured to compute a data function on a function-input value with increased resilience against program modifications.

Reference is made to European patent application 13156302, with title "Computing device configured with a table network" filed by the same applicant on 22-Feb-2013, and is included herein by reference. That application contains additional examples of encoding, table networks and the like.

A computing device configured to compute a data function on a function-input value is provided, which addresses at least this concern.

The computing device comprises an electronic storage and an electronic processor coupled to the storage. The storage stores a series of table networks. The processor is configured to compute an iterated function on a global data-input and a global state-input by applying table networks of the series of table networks.

The table networks of the series are configured for a corresponding data-function and state-function and is configured to map a data-input to a data-output according to the corresponding data-function, and to simultaneously map a state-input to a state-output according to a state-function.

The electronic processor is configured to iterate applying the table networks of the series, a table network, i.e., a first table network, of the iteratively applied table networks to the global data-input and global state-input, and a successive table network of said iteration to the data-output and state-output of a preceding table network of the series, the iterated application of the series determines a global data function on the global data-input and determines a global state function on the global state-input, thus obtaining an intermediate data-output and an intermediate state-output.

The electronic storage is further storing a protecting table network configured to cooperate with the series of table networks for countering modifications made to table networks of the series, the protecting table network being configured to receive as input: the intermediate state-output, and a global state-input. The protecting table network is configured to verify that the global state-function applied to the global state-input produces the intermediate state-output.

It would be advantageous if the code obfuscation which is possible with white-box cryptography could be more generally applied. Traditional white box cryptography is static; it transforms an algorithm into a fixed table network and transforms the network using table obfuscation, e.g., encoding of inputs and outputs. This type of obfuscation may be improved by encoding data variables together with state variables. It would be advantageous if the security of table based computations, e.g. as used in white-box cryptography, could be applied in non-static computations. For example, one impediment to using table based computations is to apply the systems to iterative structures such as loops, while-do, for-until constructs, and the like.

The system provides a series of tables or table networks that are applied iteratively. Together with a data function, the series also computes a state functions. By verifying the state function, the whole iteration is verified. The table networks in the series are applied in an order of the series, the series is iterated by applying all tables networks multiple times in the same order. In an embodiment, the series is applied 2 or more times.

Verifying a series of combined data and state computations is further improved if the series acts on data variables (input or outputs) that are encrypted together with state variables. In an embodiment, the global data-input and a global state-input are encoded together into a single global input. In an embodiment, the data-input and the state-input of a table network of the series are encoded together into a single input. In an embodiment, the data-output and the state-output of a table network of the series are encoded together into a single output. In an embodiment, the intermediate data-output and the intermediate state-output are encoded together into a single intermediate output. In an embodiment, the protected data-output and the protected state-output are encoded together into a single protected output.

The state function that is obtained by applying the table networks of the series once is referred to as the single-iteration state function. It was an insight of the inventors that the single-iteration state function may be selected independently from the data functions. The single-iteration state function may be chosen so that implementation as a table network requires fewer tables than are used in the series, and also requires less storage than the table networks in the first series do together. Moreover, the single-iteration state function may be chosen so that iterating the single-iteration state function requires few tables and/or storage. In an embodiment, the state table network comprises fewer tables than the table networks in the series together. In an embodiment, the size of the state table network on the storage is smaller than the size of the series on the storage. The state table network and/or the protection table network are not iterated and applied only once, even if the first series is iterated.

For example, an advantageous choice for the single-iteration state function is an idempotent function. Multiple iterations of an idempotent function give the same result as one iteration of the function. Accordingly, to obtain the same state function as multiple applications of the first series, the single-iteration state function need only be applied once. This simplifies the construction of the protection network considerably.

Another advantageous choice for the single-iteration state function is a nilpotent function. A nilpotent function has an associated number q, such that q applications of the function is the identity. This means that the protection network need only be able to verify up-to q application of the single-iteration state function, since the q+1'the application is equal to the single-iteration state function itself.

In an embodiment, the protecting table network is configured to receive a further input dependent upon the number of iterations of the series. This allows the protection network to look-up the result of that many application of the single-iteration state function. Receiving the number of iterations is well suited to using a nilpotent single-iteration state function. In that case a state network may look up the combination of the global state input and the number of iterations, to obtain the verification state.

For example, the further input may be the number of iterations, possibly in encoded form. For idempotent functions it is sufficient if the further input indicates if the number of iterations is 0 or larger than 0; this can be represented as a single bit. Nevertheless, larger encodings are possible. Likewise, for permutations of order q, the number of iterations mod q is sufficient. In an embodiment, a loop is implemented as two table networks, one for iterations up to a predetermined number of iterations, and another for an unlimited number of iterations. The former table network, may receive the further input, limited to the predetermined number of iterations, whereas the latter table network, may not receive the further input. The computing device could then contain control logic for selecting a table network from the two table network in dependence upon the number of iterations.

In an embodiment, control code is configured to count the number of iterations of the series and to supply number of iterations as an input to the protecting network.

A particularly interesting choice for the single-iteration state function is the identity. In this case the individual state functions implemented by the table networks of the series may be any function, as long as their function composition is the identity. This can be used by verifying that the global state input equals the final state output of the last table network of the last iteration of the series.

The protection network may act on the same global state input as the series receive, but this is not necessary. The state input of the protection network and the first series may come from different sources. The different sources are arranged so that in the absence of tampering both states are the same. After applying the iterated first series and the protection network, a difference in states causes the data value to be changed.

In an embodiment, at least one table network in the series receive additional input, e.g., from a further source other than the preceding table network. The intermediate data output of the table network may depend on the additional input, the intermediate state output does not depend on the additional input. The additional input may or may not be encrypted together with additional state input. In this way, the additional input does not disturb the relationship between the intermediate state output and verification state. Even though the additional input does not contribute to state changes, modification in a table that receives the additional input likely will change the state output of the table. Accordingly, still a check is made on computations involving such additional input. For example, the additional input may be round key, in case the series represents a single round of a block cipher.

An aspect of the invention concerns a computing device comprising an electronic storage and an electronic processor coupled to the storage, configured to apply a series of table networks. The series has a single-iteration state function that allows efficient implementation in the protection network. The series need not be applied iteratively. If iteration is nevertheless required, one could iterate both the first series and the protection network, instead of only iterating the first series but not the protection network.

The computing device is an electronic device, for example, a mobile electronic device, e.g., a mobile phone, set-top box, computer, etc.

An aspect of the invention concerns a compiler configured for obtaining a series of data functions and for producing a first series of table networks and a protecting table network and computer code. The computer code is configured to control iterative application of the first series followed by application of the protection table network. The compiler may be implemented as a computer program or as a compiler device, etc. The compiler device may comprise an electronic processor and electronic memory, the memory storing computer code configuring the processor as the compiler.

An aspect of the invention concerns a computing method. A method according to the invention may be implemented on a computer as a computer implemented method, or in dedicated hardware, or in a combination of both. Executable code for a method according to the invention may be stored on a computer program product. Examples of computer program products include memory devices, optical storage devices, integrated circuits, servers, online software, etc. Preferably, the computer program product comprises non-transitory program code means stored on a computer readable medium for performing a method according to the invention when said program product is executed on a computer

In a preferred embodiment, the computer program comprises computer program code means adapted to perform all the steps of a method according to the invention when the computer program is run on a computer. Preferably, the computer program is embodied on a computer readable medium.

## BRIEF DESCRIPTION OF THE DRAWINGS

These and other aspects of the invention are apparent from and will be elucidated with reference to the embodiments described hereinafter. In the drawings,

Figure 1a is a schematic block diagram of a composite table network 100,
Figure 1b is a schematic block diagram of a variant in table network 100,
Figure 2 is a schematic block diagram of a composite table network 200,
Figure 3 is a schematic block diagram of a composite table network 300,
Figure 4 is a schematic block diagram of a computing device 400,
Figure 5 is a schematic block diagram of a composite table network 500
Figure 6 is a schematic flow chart of a compiling method 600.
Figure 7 is a schematic flow chart of a computing method 700.

It should be noted that items which have the same reference numbers in different Figures, have the same structural features and the same functions, or are the same signals. Where the function and/or structure of such an item has been explained, there is no necessity for repeated explanation thereof in the detailed description.

## DETAILED DESCRIPTION OF EMBODIMENTS

While this invention is susceptible of embodiment in many different forms, there is shown in the drawings and will herein be described in detail one or more specific embodiments, with the understanding that the present disclosure is to be considered as exemplary of the principles of the invention and not intended to limit the invention to the specific embodiments shown and described.

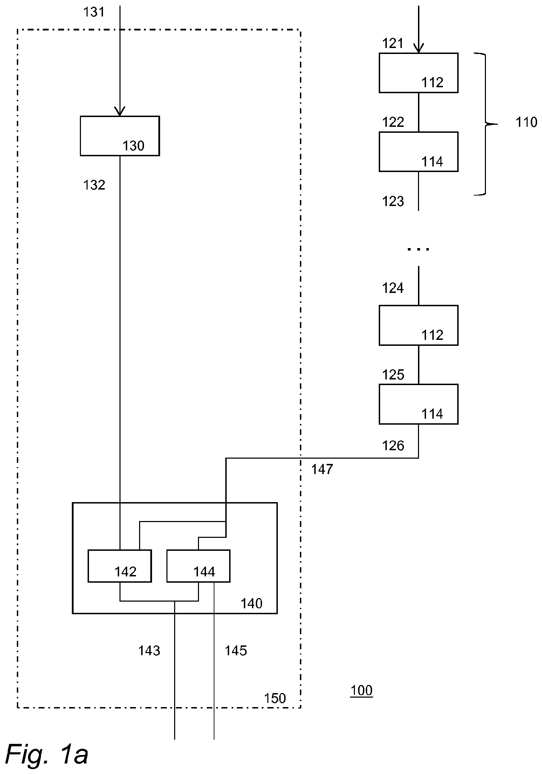

Figure 1a is a schematic block diagram of a composite table network 100.

Computing devices may be protected against attacks by executing all or part of the computations of the computing devices through networks of tables. A table network can be protected by encoding the variables and tables. Nevertheless, attacks remain a concern. One possible attack vector is to the modify tables, run the computation, and see what effects the modification has. In this way an attacker may gain insight in the encryptions used. To counter this one may introduce state variables in addition to data variables. State variables are variables that mirror the computational path of the data variables, or part thereof. However, the nature of the computation that is performed on the state variable may differ from the computation performed on the data variable. State variables may be verified in various ways during the computation. Because state and data variables are often encoded together in a single variable, it is difficult for an attacker to modify tables so that data variable are affected but the state variable is not. When it is detected that a state variable has been tampered with, the device may take appropriate action. Often this detection can be done implicitly, rather than through an explicit check. Moreover, because of state variables the same data has multiple representations. Checking the consistency of these state variables makes it is possible to detect some types of attacks.

Figure 1a shows a composite table network 100 that is made of multiple sub-tables or sub-table networks. Composite table network 100 is designed to work with a computing device that comprises an electronic processor and has access to an electronic storage. The multiple smaller tables or table networks that make up composite table network 100 are stored on the storage. The electronic processor is coupled to the storage, and configured to apply the tables to their respective input values and output values.

Composite table network 100 comprises a series of table networks 110 and a protecting table network 150.

Series 110 comprises one or more table networks. In Figure 1a, series 110 comprises table networks 112 and 114. A table network may consist of a single table, or may comprise multiple tables cooperating to compute a function. Also table networks 112 and 114 may just as well be single tables.

For larger computations there is a tradeoff between representing a computation or part thereof as a single table or as a table network. The latter offers more points at which an attacker could try to attack the system, but on the other hand the network may require less storage space. Some computations do not have a practical representation as a single table, as it would be too large, in this case a table network is required. For example, a full AES computation may be represented by a table network, but not by a single table. Typically, a table can be replaced by a table network which is being functionally the same. When distinguishing from a table network is needed, we refer to a table as a 'single table' or a 'monolithic table'.

In addition to series 110, the computing device may combine many more table networks and/or series of table networks to compute some computation result.

For simplicity, we refer to the elements of series 110 as table networks, keeping in mind that a table network may be a single table or multiple cooperating tables. Series 110 may comprise one or multiple table networks. Shown in figure 1a are two tables 112 and 114, also referred to as $T_1$ and $T_2$. More or fewer table networks are possible. In particular, series 110 may consist of a single table or a single table network 112. Series 110 may comprise multiple table networks.

For protecting table network 150 the same reasoning applies; it may be represented as a single table, in fact some of the choices given below make protecting table network 150 well-suited to representation as single table. For simplicity, we will refer to protecting table network 150 as a table network, keeping in mind that its input-output behavior could completely be replaced by one table.

The processor is configured to compute an iterated function on a global data-input (121, $w_0$) and a global state-input (121, $s_0$) by applying the table networks of series 110. That is, the table networks of series 110 are applied more than once on the global data and state input.

The table networks in series 110 each receive a data-input and a state-input. Data-variables are referred to with the letter w and state variables with the letter s. A table network $T_i$ of series 110, e.g., table networks 112 and 114, are configured for a corresponding data-function $f_i$ and state-function $g_i$.

In this way, a series of variables is produced, e.g., for two table networks and two iterations we may get the following (reference numbers refer to Figure 1a).

| Step | Table | Input | Output | |
|------|-------|-------|--------|--|
| 1 | 112 | 121; $(w_0,s_0)$ | 122; $(w_1,s_1) = (f_1(w_0),g_1(s_0))$ | |
| 2 | 114 | 122; $(w_1,s_1)$ | 123; $(w_2,s_2) = (f_2(w_1),g_2(s_1))$ | |
| 3 | 112 | 124 = 123; $(w_2,s_2)$ | 125; $(w_3,s_3) = (f_1(w_2),g_1(s_2))$ | |
| 4 | 114 | 125; $(w_3,s_3)$ | 126; $(w_4,s_4) = (f_2(w_3),g_2(s_3))$ | |

The number of iterations may be larger than 2. If there are exactly 2 iterations, then reference numeral 124 refers to the same data as numeral 123. Each table network in the iteration maps a data-input $w_{i-1}$ to a data-output $w_i$ according to the corresponding data-function $f_i$, and simultaneously maps a state-input $s_{i-1}$ to a state-output $s_i$ according to a state-function $g_i$. Data $w_{i-1}$ and state input $s_{i-1}$ are the outputs of a previous table, except for a first table, in which case it is the input.

We use the notation $(w, s)$ to indicate the joint encryption of a data and state variable. For example, one may define a encoding function E(w,s) that maps a data and state variable to a variable $u$ in which both data and state are combined. The mapping E is injective, e.g. invertible, i.e., given the joint encryption one can recover the original data and state values. The inverse mappings are indicated by $\rho$ and $\sigma$ for the data and state extractors respectively; so that $E(\rho(u),\sigma(u)) = u$.

State and data variables may have various sizes. If series 110 contains only single tables, these size are usually somewhat moderate, e.g. data size of 4 to 8 bits. State sizes may be equal to the data size or slightly smaller, say, 2-8 bits. However, if series 110 contain table networks the data and state values, are in principle unlimited, say, 128 bit, 256 bits etc.

Generally, during the iterated application of series 110, the data inputs and outputs are encrypted together with its corresponding state inputs or outputs.

The iterated application of the series determines a global data function on the global data-input and determines a global state function. If series 110 comprises two table networks the global data function is given by $f = f_2 \circ f_1 \circ f_2 \circ f_1$ and the global state function by $g = g_2 \circ g_1 \circ g_2 \circ g_1$. on the global state-input, thus obtaining an intermediate data-output $(126, w_{inter} = f(w_0))$ and an intermediate state-output $(126, s_{inter} = g(s_0))$. Also the $s_{inter}$ and $w_{inter}$ are encrypted together in a single value, referred to as 126.

The number of iterations may be fixed, or controlled through a loop control variable. A loop control variable is sometimes referred to as 'i' or 'index'. Especially in the latter case, the processor may be configured with control logic to apply series 110 a loop control variable number of times. For example, the control logic may access a loop control variable representing the number of iterations. The control logic decreases the loop control variable with each iteration. Operations on the control loop control variable may be implemented as a table network itself.

When the loop control variable is not zero, control is returned after the iteration to so that a new iteration is performed, if the loop control variable is zero, control is passed on. Even this control may be represented as a table network. For example, a table may compute a machine address to jump to in dependence of the variable.

Instead of using the loop control variable to control the number of iterations, the number of iterations may be controlled by other means, e.g. a while-condition. In this case, the loop control variable counts the number of iterations that were actually performed.

Protecting table network 150 is configured to cooperate with the series of table networks for countering modifications made to table networks of the series. The protecting table network 150 is configured to receive as input: the intermediate state-output $s_{inter}$ and a global state-input 131.

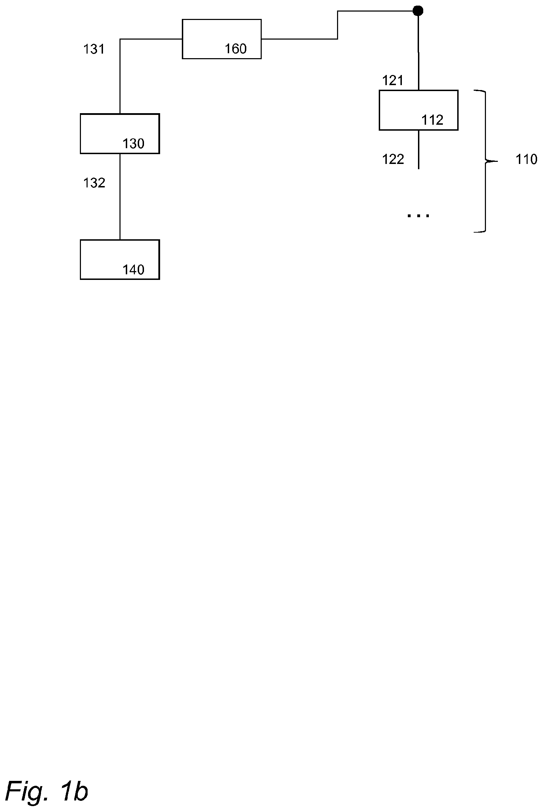

The global state-input 131 that protecting table network 150 receives may be a copy of the global state-input to which series 110 is applied ($s_0$). For example, one may apply a state extractor table 160 to input 121 to obtain the state. The extracted state will be in encoded form. This possibility is shown in figure 1b. However, protecting table network 150 may also receive a state variable that is obtained from a different source from the input 121. For example, a previous computation may have produced two outputs, 1) a data-output encoded together with a state-output and 2) the state-output. These two state-outputs should be the same, but this is only checked in a later computation, in particular in protecting table network 150. Figure 1a may be used with both possibilities. Variables which encode a data and state variable together are sometimes referred to as long variables, data or state only as short variables.

Protecting table network 150 is configured to verify that the global state-function ($g$) applied to the global state-input ($s_0$) produces the intermediate state-output, symbolically denoted as $s_{inter} = g(s_0)$ ?.

In figure 1a, protecting table network 150 has two tables: a state table network 130, $T_c$ and align table 140. The state table network $T_c$ is configured for the global state-function ($g$) and is configured to map the state-input 131 to a verification state-output 132, $s_c$, which should be equal to $g(s_0)$. Protecting table network 150 takes the global state-input 131 as input and applies the state table network 130 to it to obtain the verification state-output 132. Preferably, the number of tables in state table network 130, $T_c$ is strictly less than the number of tables in series 110.

Align table 140 receives verification state-output 132, $s_c$ and the intermediate data/state-output $(147, u = (w_{inter}, s_{inter}))$ and produces as output a protected data and state output 143 and optionally also a protected state output 145. If the state in the intermediate data/state-output 147, $u$ is the same as the verification state-output 132, then the data in data and state output 143 equals the data in intermediate data/state-output 147, $u$, and the state in data and state output 143 equals the verification state-output 132, $s_c$ (or the state in u, they are the same in this case), to which state permutation 144 has been applied. The permutation may be omitted, but its presence ensures that the output of align table 140 differs from its input 147 even if no error was detected.

In an example not covered by the claims, align table 140 may be constructed from a function z 142 and an optional permutation 144. The verification state-output 132, and the intermediate data/state-output 147, $u = (w_{inter}, s_{inter})$ are inputs to z-function 142. Here $z(u, s_c) = \rho(u)$ if $\sigma(u) = s_c$; The functions $\rho$ and $\sigma$ are data and state extractors respectively. Align table 140 thus verifies that the verification state-output equals the intermediate state-output ($s_{inter} = s_c$ ?).

If $\sigma(u) \neq s_c$, the output of z may be a random data output; One may require that the output is always different from $\rho(u)$ or often different, say in at least 90% of the case. The output should at least differ for some input values.

Permutation 144 applies a permutation (perm) to a state, here the state is obtained from intermediate data/state-output 147, but the verification state was also possible. Having a permutation in the align table ensures that the output of the table may change, regardless of the fact whether an error, i.e., an unauthorized table modification, has been detected or not. This avoids an attack in which a change in table 140 is used to determine the changes introduced by tampering.

That data-output obtained from the z-function and the state from permutation 144 are encoded together in protected data and state output 143 ($z(u, s_c)$, $Perm(s_c)$). The state output may also be output encoded separately as state output 145, $Perm(s_c)$. Having output 143 and 145 allows a following computation to use these as inputs, like inputs 131 and 121. Outputs 143 and 145 are referred to a 'protected outputs'.

Table 140 may be a single table, in which functions 142 and 144 are not separately visible. Table network 130 may also be implemented as a single table, so that protection table network 150 comprises two single tables. In an embodiment, state table network 130 and/or align table 140 are a table network having more than one table. Protection table network 150 may be a single table, e.g., if the single iteration state function is the identity.

The state functions used in series 110 may be chosen independently from the data-functions. This means that advantageous choices can be made. For example, one may select all state-functions ($g_i$) corresponding to a table network ($T_i$) in the series to be equal ($g_0$), even if the data-functions are not. By making appropriate choices for the state-functions their function composition may be simple to compute, even though the function composition of the data-functions may not be simple to compute.

The function on the state input determined by a single iteration of the table networks of series 110 is referred to as a single-iteration state function ($\tilde{g} = g_2 \circ g_1$). One may choose the individual state function $g_i$ so that the single-iteration state function $\tilde{g}$ is particularly simple. If the series has only a single table network then $\tilde{g} = g_0$. When the series of table networks is applied iteratively, the single-iteration state function $\tilde{g}$ is thus applied itereratively.

In an embodiment, the single-iteration state function ($\tilde{g}$) is idempotent. An idempotent function has the property that $\tilde{g}(\tilde{g}(x)) = \tilde{g}(x)$, applying an idempotent function once may change the input, but applying it more than once does not change the function further. In particular, $\tilde{g}$ may be idempotent, but not the identity. A random idempotent function may be selected as follows: First partition all state value in fixed points and non-fixed points, there should be at least one fixed point, next for each non-fixed point x select a fixed point y and set $\tilde{g}(x) = y$. This algorithm is well-suited for implementation in tables. The partition and selections may be random.

If the number of iterations is known to be at least one, and $\tilde{g}$ is idempotent, then state table network 130 may be configured for $\tilde{g}$, without having to know the precise number of iterations.

In an embodiment, on or more or all of the table networks in the series receive additional input from a further source other than the preceding table network. The data output of the table network may depend on the additional input. The additional input may or may not be encrypted together with additional state input, nevertheless the state input does not depend on the additional input. In this way, the additional input does not disturb the relationship between the intermediate state output and verification state.

Typically, the computing device comprises a microprocessor (not shown) which executes appropriate software stored at the device; for example, that software may have been downloaded and/or stored in a corresponding memory, e.g., a volatile memory such as RAM or a non-volatile memory such as Flash (not shown).

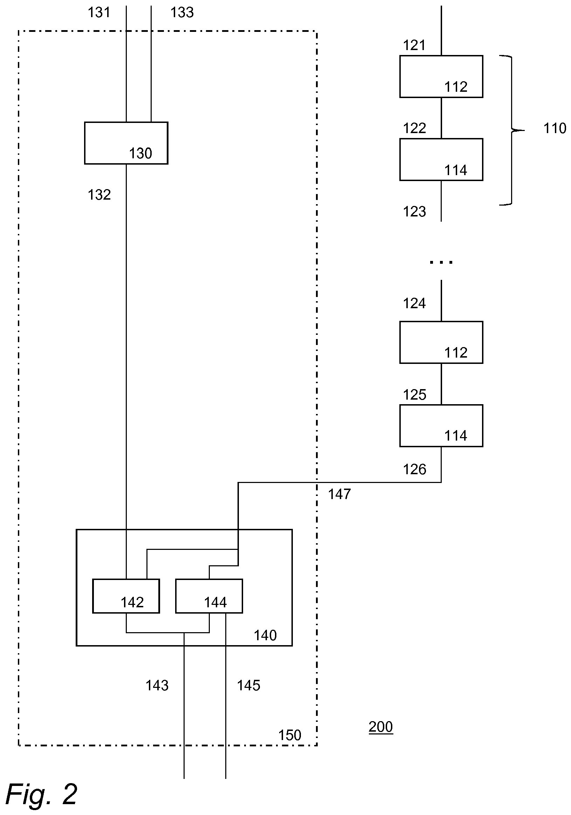

Figure 2 is a schematic block diagram of a composite table network 200. Figure 2 is almost the same as figure 1, except that state table network 130 has an additional input 133, k: the number of iterations of series 110. State table network 130 is configured to compute the iterated effect of the single-iteration state function $\tilde{g}$. For example, one may select the single-iteration state function $\tilde{g}(s) = s + c$, as the addition of a constant. In that case state table network 130 can be configured to compute $s + kc$ (s refers to input 131). The latter function can be easily realized in a small table network. Accordingly, the amount of storage needed for state table network 130 is much less than what is needed for series 110.

If $\tilde{g}$ is idempotent, and the number of iterations may be zero, than state table network 130 need only be configured for two values of input 133, i.e., zero and non-zero.

In an embodiment is $\tilde{g}$ is nilpotent, i.e., there exists an integer q so that q compositions of the function $\tilde{g}$ equals the identity. Examples of such functions are permutations having a cycle decomposition that has only cycles with a length that divides q, i.e., $\tilde{g}$ is a permutation of order q so that q compositions of $\tilde{g}$ equals the identity. In such a case state table network 130 need only be large enough to compute at most q compositions of g. In this case, also the further input 133 may be simplified, as only its value modulo q is needed.

If $\tilde{g}$ is the identity, the protecting table network 150 may more easily be implemented as a single table.

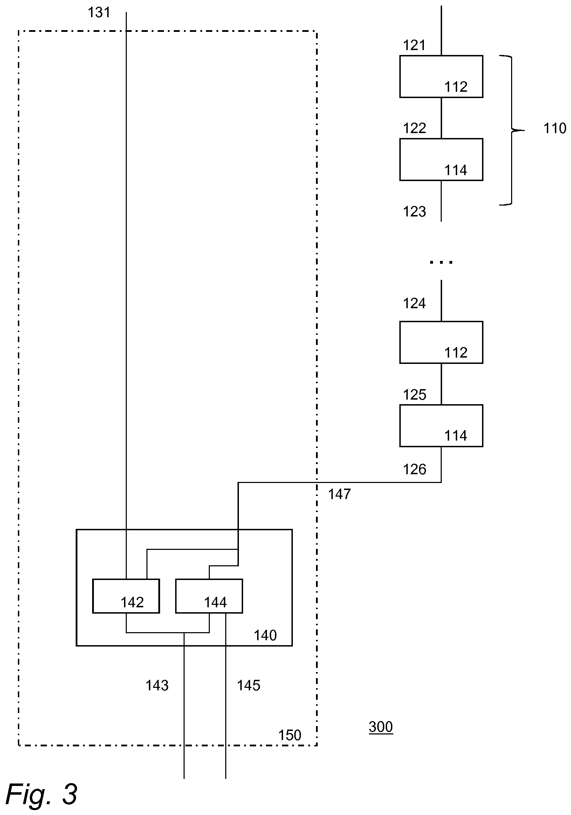

Figure 3 is a block cipher that shows yet another option. Here $\tilde{g}$ is chosen to be the identity. The protecting table network 150 is configured to verify that the global state-input ($s_0$) equals the intermediate state-output ($s_{inter} = s_0$ ?). In this case table 130 may be omitted entirely.

One way to select the $g_i$ to obtain a desired single-iteration state function is as follows. Assume series 110 has n table networks, defining n functions $g_i$. First select $\tilde{g}$ and represent $\tilde{g}$ as a permutation on all values of the state variable. Next select random permutation for $g_1, ..., g_{n-1}$. Finally, select, the final state function $g_n$ from the single iteration $\tilde{g}$ function and the inverses of the random permutations, e.g., as $g_n = \tilde{g}\, g_1^{-1} g_2^{-1} ... g_{n-1}^{-1}$. This algorithm may be applied, e.g., when $\tilde{g}$ is the identity, or nilpotent. In an embodiment, the single-iteration state function differs from the state-function ($g_i$) of at least one table network ($T_i$) of the series, more in particular, e.g., even if the single-iteration state function is nil-potent or idempotent. In an embodiment, the single-iteration state function differs from each state-function ($g_i$) of any table network ($T_i$) of the series, more in particular even if the single-iteration state function is nil-potent or idempotent.

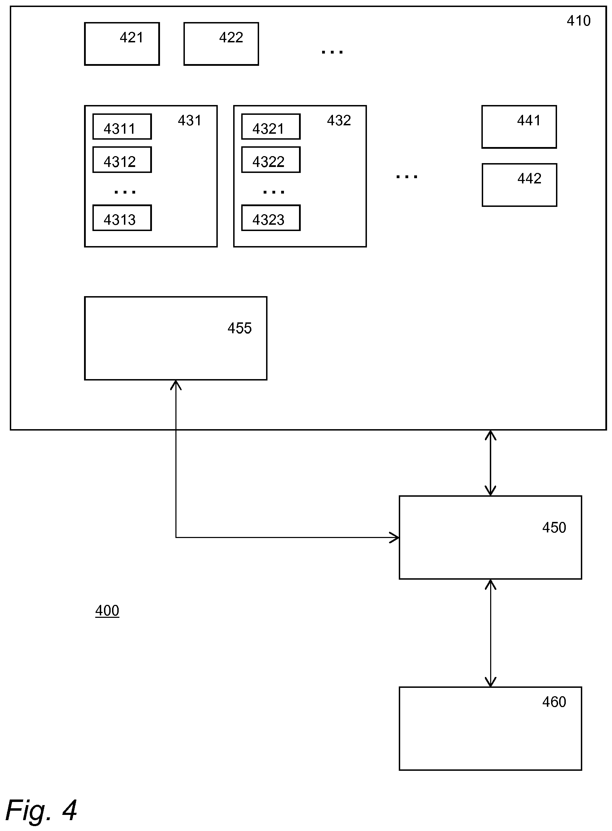

Figure 4 is a schematic block diagram of a computing device 400.

Figure 4 shows a computing device 400, having a storage device 410. The device shown in figure 4 may used with the table networks illustrated in figures 1, 2, 3, and 5.

Storage device 410 is typically one or more non-volatile memories, but may also be a hard disc, optical disc, etc. Storage device 410 may also be a volatile memory comprising downloaded or otherwise received data. Computing device 400 comprises a processor 450. The processor typically executes code 455 stored in a memory. For convenience the code may be stored in storage device 410. The code causes the processor to execute a computation. Device 400 may comprise an optional I/O device 460 to receive input values and/or transmit results. I/O device 460 may be a network connection, removable storage device, etc.

Storage device 410 contains one or more table networks according to one of the figures 1 to 3, or 5.

In an embodiment, the computing device may work as follows during operation: computing device 400 receives input values. The input values are encoded, e.g. by using an encoding table 441. Thus the input values are obtained as encoded input values. Note that the input values could be obtained as encoded input values directly, e.g. through device 460. Encoding an input value to an encoded input value implies that a state input has to be chosen. There are several ways to do so, for example the state input may be chosen randomly, e.g., by a random number generator. The state input may be chosen according to an algorithm; the algorithm may be complicated and add to the obfuscation. The state input value may also be constant, or taken sequentially from a sequence of numbers, say the sequence of integers having a constant increment, say of 1, and starting at some starting point; the starting point may be zero, a random number, etc. Choosing the state inputs as a random number and increasing with 1 for each next state input choice is a particular advantageous choice. If the state inputs are chosen off-device the attacker has no way to track where state input values are chosen and what they are.

Processor 450 executes a program 455 in storage device 410. The program causes the processor to apply look-up tables to the encoded input values, or to resulting output values. Look-up tables may be created for any logic or arithmetic function thus any computation may be performed by using a sequence of look-up tables. This helps to obfuscate the program. In this case the look-up tables are encoded for obfuscation and so are the intermediate values. In this case the obfuscation is particularly advantageous because a single function input value may be represented by multiple encoded input values. Furthermore, some or all table and/or table networks have the multiple function property, of the table networks that have the multiple function property some or all are paired with a second table network for verification of the results.

At some point a result value is found. If needed the result may be decoded, e.g. using a decoding table 442. But the result may also be exported in encoded form. Input values may also be obtained from input devices, and output values may be used to show on a screen.

The computation is performed on encoded data words. The computation is done by applying a sequence of table look-up accesses. The input values used may be input values received from outside the computing device, but may also be obtained by previous look-up table access. In this way intermediate results are obtained which may then be used for new look-up table accesses. At some point one of the intermediate results is the encoded result of the function.

Computing device 400 may comprise a random number generator for assigning state input values to data function inputs.

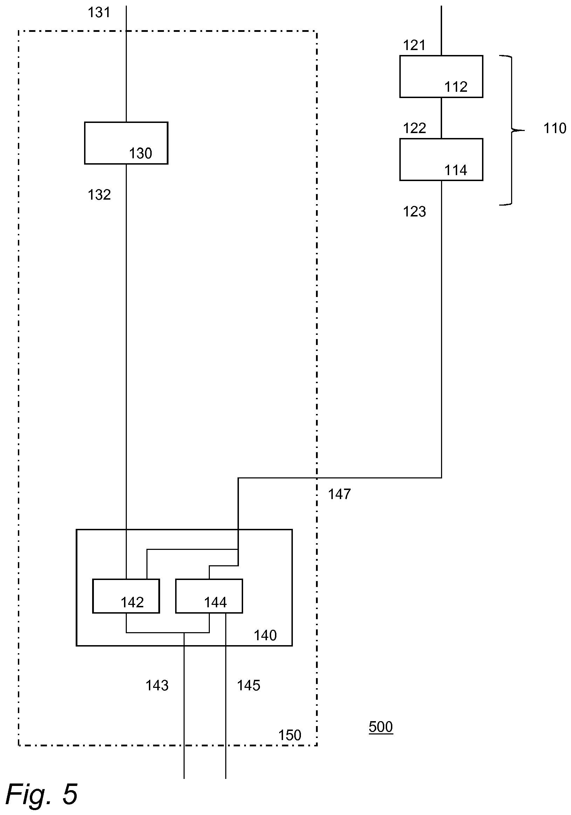

Figure 5 is a schematic block diagram of a composite table network 500. Table network 500 is the same as table network 1a. Also in figure 5, output 145 and table 130 are optional. However, in figure 5 series 110 comprises at least two table networks, moreover, series 110 is not iterated, but applied once to the input. The global state function may be the identity (not shown). In that case the series may be verified with little overhead. If the global state function is not the identity, then a table 130 may be used (as shown in figure 5). However, only single table network, or even table 130 is needed to verify the multiple tables in series 110. In particular, the size of the state table network 130 on the storage (510), is smaller than the size of the series 110 on the storage.

For example, composite table network 500 may represent a block cipher having multiple rounds, say AES, DES, etc. Each round of the block cipher is computed by a table network of series 110, wherein the data-function represents the block cipher round. Each data-function is coupled with a state-function. The state functions are chosen so that the global state function is the identity. For example, in the first half of the rounds the state functions are equal to the data-functions but in the second half of the rounds the state functions are the inverses of the state functions in the first half. As a result the series computes the block cipher with the data-functions but computes the identity with the state functions.

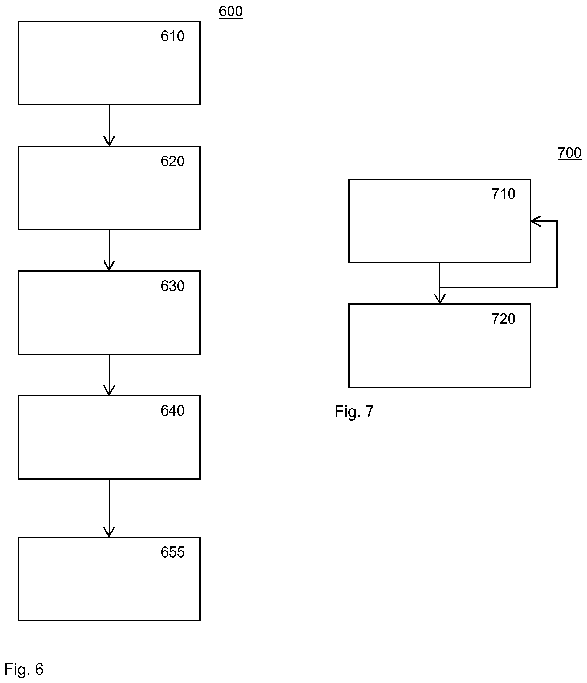

Figure 6 illustrates as flow chart a compiling method 600. In step 610 a first computer program is received by a receiver. In step 620 a lexical analysis is performed, e.g., to identify tokens, by a lexical analyzer. Possibly processing such as macro expansion is also done. In step 630 the program is parsed by a parser. For example, the parser generates a parsing tree according to a formal grammar of the programming language of the first program. The parser identifies the different language constructs in the program and calls appropriate code generation routines. In particular, an operator or multiple operators are identified. In that case, in step 640 code generation is done by a code generator. During code generation some code is generated and if needed accompanying tables. The accompanying tables include tables that are configured for two functions: one for the needed operator, i.e., the data function, and a state function.

The compiler is configured to identify function or functions. In that case, in step 640 code generation is done by a code generator. During code generation some code is generated and a series 110 of table networks. Also a protection table network 150 is generated. The generated code is configured to iteratively apply series 110. To the result protecting table network 150 is applied, as indicated above.

In step 655 the generated tables are merged to a table base, since it may well happen that some tables are generated multiple times; in that case it is not needed to store them multiple times. E.g. an add-table may be needed and generated only once. When all code is merged and all tables are merged the compilation is finished. Optionally, there may be an optimization step.

Typically, the compiler uses encoded domains, i.e., sections of the program in which all value, or at least all values corresponding to some criteria, are encoded, i.e., have code word bit size (n). In the encoded domain, operations may be executed by look-up table execution. When the encoded domain is entered all values are encoded, when the encoded domain is left, the values are decoded. A criterion may be that the value is correlated, or depends on, security sensitive information, e.g., a cryptographic key.

An interesting way to create the compiler is the following. In step 630 an intermediate compilation is done. This may be to an intermediate language, e.g. register transfer language or the like, but may also be a machine language code compilation. This means that for steps 610-630 of figure 6 a conventional compiler may be used, which is does not produce table networks. However in step 640 code generation is done based on the intermediate compilation. For example, if machine language code was used, each instruction is replaced by a corresponding operator free implementation of that instruction, i.e., a table-based implementation of that instruction. This represents a particular straightforward way to create the compiler. Figures 6 may also be used to generate a compiler that produces not machine language but a second programming language.

Figure 7 is a schematic flow chart of a computing method 700 that uses a series of table networks (110, $T_1$, $T_2$), the method being configured to compute an iterated function on a global data-input (121, $w_0$) and a global state-input (121, $s_0$) by applying table networks of the series of table networks.

The method comprising iteratively applying 710 the table networks of the series ($T_1$, $T_2$, $T_1$, $T_2$), a table network ($T_1$) of the iteratively applied table networks to the global data-input ($w_0$) and global state-input ($s_0$), and a successive table network ($T_2$, $T_1$, $T_2$) of said iteration to the data-output and state-output of a preceding table network of the series, the iterated application of the series determines a global data function ($f = f_2 \circ f_1 \circ f_2 \circ f_1$) on the global data-input and determines a global state function ($g = g_2 \circ g_1 \circ g_2 \circ g_1$) on the global state-input, thus obtaining an intermediate data-output ($w_{inter} = f(w_0)$) and an intermediate state-output ($s_{inter} = g(s_0)$), and

Verifying 720 that the global state-function ($g$) applied to the global state-input ($s_0$) produces the intermediate state-output ($s_{inter} = g(s_0)$ ?) by applying a protecting table network (150) configured to cooperate with the series of table networks for countering modifications made to table networks of the series, the protecting table network being configured to receive as input: the intermediate state-output (125; 126, $s_{inter}$), and a global state-input (131, $s_0$), the protecting table network being configured to verify that the global state-function ($g$) applied to the global state-input ($s_0$) produces the intermediate state-output ($s_{inter} = g(s_0)$ ?).

Many different ways of executing the method are possible, as will be apparent to a person skilled in the art. For example, the order of the steps can be varied or some steps may be executed in parallel. Moreover, in between steps other method steps may be inserted. The inserted steps may represent refinements of the method such as described herein, or may be unrelated to the method. For example, steps 710 and 720 may be executed, at least partially, in parallel. For example, if table 130 is used in step 720, then table 130 may be run completely in parallel to series 110.

Moreover, a given step may not have finished completely before a next step is started.

A method according to the invention may be executed using software, which comprises instructions for causing a processor system to perform method 700. Software may only include those steps taken by a particular sub-entity of the system. The software may be stored in a suitable storage medium, such as a hard disk, a floppy, a memory etc. The software may be sent as a signal along a wire, or wireless, or using a data network, e.g., the Internet. The software may be made available for download and/or for remote usage on a server. A method according to the invention may be executed using a bitstream arranged to configure programmable logic, e.g., a field-programmable gate array (FPGA), to perform a method according to the invention.

It will be appreciated that the invention also extends to computer programs, particularly computer programs on or in a carrier, adapted for putting the invention into practice. The program may be in the form of source code, object code, a code intermediate source and object code such as partially compiled form, or in any other form suitable for use in the implementation of the method according to the invention. An embodiment relating to a computer program product comprises computer executable instructions corresponding to each of the processing steps of at least one of the methods set forth. These instructions may be subdivided into subroutines and/or be stored in one or more files that may be linked statically or dynamically. Another embodiment relating to a computer program product comprises computer executable instructions corresponding to each of the means of at least one of the systems and/or products set forth.

It should be noted that the above-mentioned embodiments illustrate rather than limit the invention, and that those skilled in the art will be able to design many alternative embodiments.

In the claims, any reference signs placed between parentheses shall not be construed as limiting the claim. Use of the verb "comprise" and its conjugations does not exclude the presence of elements or steps other than those stated in a claim. The article "a" or "an" preceding an element does not exclude the presence of a plurality of such elements. The invention may be implemented by means of hardware comprising several distinct elements, and by means of a suitably programmed computer. In the device claim enumerating several means, several of these means may be embodied by one and the same item of hardware. The mere fact that certain measures are recited in mutually different dependent claims does not indicate that a combination of these measures cannot be used to advantage.

List of Reference Numerals in figures 1a, 1b, 2-5:

| | |
|---|---|
| 100, 200 300, 400 500 | a composite table network |
| 110 | a series of tables or table networks |
| 112,114 | a table or table network |
| 121 | global data-input and global state-input |
| 122 | data-output and state-output of table 112 |
| 124 | data-input and state-input of iteration of table 112 |
| 123 | data-output and state-output of table 114 |
| 125 | data-output and state-output of iteration of table 112 |
| 126 | data-output and state-output of iteration of table 114 |
| 130 | a state table or table network configured for the global state-function |
| 131 | a verification global state-input |
| 132 | a verification state-output |
| 133 | a number of iterations of series |
| 140 | align table or table network |
| 142 | z function |
| 143 | protected data and state output |
| 144 | a permutation |
| 145 | protected state output |
| 147 | data and state input of align table 140 |
| 150 | a protecting table or table network |
| 160 | a state extractor table |
| 400 | a computing device |
| 410 | a storage |
| 441 | encoding look-up table |
| 442 | decoding look-up table |
| 450 | a computer processor |
| 455 | machine language code |
| 460 | I/O device |
| 421, 422 | single input look-up tables |
| 431, 432 | multiple input look-up tables |
| 4311-4323 | single input look-up tables |

**Claims**

1.  A computing device (500) comprising an electronic storage (510) and an electronic processor (550) coupled to the storage, the storage storing a series of table networks (110), the processor being configured to compute an iterated function on a global data-input (121) and a global state-input (121) by applying table networks of the series of table networks,

    - a table network (112, 114) of the series being configured for a corresponding data-function and state-function and is configured to map a data-input (121, 122) to a data-output (122, 123) according to the corresponding data-function, and to simultaneously map a state-input (121, 122) to a state-output (122, 123) according to a state-function,

- the electronic processor being configured to iterate applying the series of table networks, a table network of the iteratively applied table networks to the global data-input and global state-input, and a successive table network of said iteration to the data-output and state-output of a preceding table network of the series, the iterated application of the series determines a global data function on the global data-input and determines a global state function on the global state-input, thus obtaining an intermediate data-output and an intermediate state-output,

- the electronic storage is further storing a protecting table network (150) configured to cooperate with the series of table networks for countering modifications made to table networks of the series, the protecting table network being configured to receive as input: the intermediate state-output (126), and a global state-input (131), the protecting table network being configured to verify that the global state-function applied to the global state-input produces the intermediate state-output.

2. A computing device as in Claim 1, wherein a single iteration of the table networks of the series, determines a single-iteration state function on the global state-input, the single-iteration state function being idempotent or nilpotent.

3. A computing device as in Claim 2, wherein the single-iteration state function is the identity, the protecting table network being configured to verify that the global state-input equals the intermediate state-output.

4. A computing device as in Claim 1, wherein the protecting table network is configured to receive a further input dependent upon the number of iterations of series (133).

5. A computing device as in Claim 1, wherein the protecting table network is further configured to receive as input: the intermediate data-output (126) and produce as output a protected data-output and protected state-output (143), wherein

- the protected data-output is equal to the intermediate data-output in case the verification is successful and the protected data-output is unequal to the intermediate data-output in case the verification is unsuccessful for at least some values of the global data-input and the global state-input.

6. A computing device as in Claim 1, wherein the protecting table network comprises a state table network (130), the state table network being configured for the global state-function and is configured to map the state-input to a verification state-output (132), the protecting table network being configured to verify that verification state-output equals the intermediate state-output.

7. A computing device as in Claim 6, wherein the state table network (130) comprise fewer tables than the series of tables networks (110) together.

8. A computing device as in Claim 1, wherein all state-functions corresponding to a table network in the series are equal.

9. A computing device as in Claim 1, wherein

- the global data-input and a global state-input are encoded together into a single global input,
- the data-input and the state-input of a table network of the series are encoded together into a single input,
- the data-output and the state-output of a table network of the series are encoded together into a single output,
- the intermediate data-output and the intermediate state-output are encoded together into a single intermediate output,
- the protected data-output and the protected state-output are encoded together into a single protected output.

10. A computing method (700) using a series of table networks (110), the method being configured to compute an iterated function on a global data-input (121) and a global state-input (121) by applying table networks of the series of table networks,

- a table network (112, 114) of the series being configured for a corresponding data-function and state-function and is configured to map a data-input (121, 122) to a data-output (122, 123) according to the corresponding data-function, and to simultaneously map a state-input (121, 122) to a state-output (122, 123) according to a state-function,
- the method comprising
- iteratively applying (710) the series of table networks, a table network of the iteratively applied table networks to the global data-input and global state-input, and a successive table network of said iteration to the data-output and state-output of a preceding table network of the series, the iterated application of the series determines a global data function on the global data-input and determines a global state function on the global state-input, thus obtaining an intermediate data-output and an intermediate state-output,

- verify (720) that the global state-function applied to the global state-input produces the intermediate state-output by applying a protecting table network (150) configured to cooperate with the series of table networks for countering modifications made to table networks of the series, the protecting table network being configured to receive as input: the intermediate state-output (126), and a global state-input (131), the protecting table network being configured to verify that the global state-function applied to the global state-input produces the intermediate state-output.

11. A compiler configured for obtaining a series of data functions and for producing a first series of table networks (110) and a protecting table network (150) and computer code, the first series (110) and protecting table network (150) being configured for storage on a electronic storage and the computer code being configured for execution on an electronic processor coupled to the electronic storage, the computer code being configured to compute an iterated function on a global data-input (121) and a global state-input (121) by applying table networks of the series of table networks,

- a table network (112, 114) of the series being configured for a corresponding data-function of the series of data functions and state-function and is configured to map a data-input (121, 122) to a data-output (122, 123) according to the corresponding data-function, and to simultaneously map a state-input (121, 122) to a state-output (122, 123) according to a state-function,
- the computer code being configured to iterate applying the series of table networks, a table network of the iteratively applied table networks to the global data-input and global state-input, and a successive table network of said iteration to the data-output and state-output of a preceding table network of the series, the iterated application of the series determines a global data function on the global data-input and determines a global state function on the global state-input, thus obtaining an intermediate data-output and an intermediate state-output,
- the protecting table network (150) being configured to cooperate with the series of table networks for countering modifications made to table networks of the series, the protecting table network being configured to receive as input: the intermediate state-output (126), and a global state-input (131), the protecting table network being configured to verify that the global state-function applied to the global state-input produces the intermediate state-output.

12. A computer program comprising computer program code means adapted to perform all the steps of Claim 10 when the computer program is run on a computer.

13. A computer program as claimed in claim 11 or 12 embodied on a computer readable medium.

**Patentansprüche**

1. Berechnungsvorrichtung (500), umfassend einen elektronischen Speicher (510) und einen mit dem Speicher gekoppelten, elektronischen Prozessor (550), wobei der Speicher eine Reihe von Tabellennetzwerken (110) speichert, wobei der Prozessor so konfiguriert ist, dass er eine iterierte Funktion auf einer globalen Dateneingabe (121) und einer globalen Zustandseingabe (121) durch Anwenden von Tabellennetzwerken der Reihe von Tabellennetzwerken berechnet,

- wobei ein Tabellennetzwerk (112, 114) der Reihe für eine entsprechende Datenfunktion und Zustandsfunktion konfiguriert und so eingerichtet ist, dass es eine Dateneingabe (121, 122) einer Datenausgabe (122, 123) gemäß der entsprechenden Datenfunktion zuordnet und gleichzeitig eine Zustandseingabe (121, 122) einer Zustandsausgabe (122, 123) gemäß einer Zustandsfunktion zuordnet,
- wobei der elektronische Prozessor so konfiguriert ist, dass er das Anwenden der Reihe von Tabellennetzwerken, einem Tabellennetzwerk der iterativ angewandten Tabellennetzwerke auf die globale Dateneingabe und globale Zustandseingabe, sowie einem sukzessiven Tabellennetzwerk dieser Iteration auf die Datenausgabe und Zustandsausgabe eines vorhergehenden Tabellennetzwerks der Reihe wiederholt, wobei das iterierte Anwenden der Reihe eine globale Datenfunktion auf der globalen Dateneingabe ermittelt und eine globale Zustandsfunktion auf der globalen Zustandseingabe ermittelt, wodurch eine Zwischen-Datenausgabe und eine Zwischen-Zustandsausgabe erhalten werden,
- wobei der elektronische Speicher weiterhin ein Schutz-Tabellennetzwerk (150) speichert, das so konfiguriert ist, dass es mit der Reihe von Tabellennetzwerken zusammenwirkt, um an Tabellennetzwerken der Reihe vorgenommenen Modifikationen entgegenzuwirken, wobei das Schutz-Tabellennetzwerk so konfiguriert ist, dass es als Input empfängt: die Zwischen-Zustandsausgabe (126) sowie eine globale Zustandseingabe (131), wobei das Schutz-Tabellennetzwerk so konfiguriert ist, dass es verifiziert, dass die auf die globale Zustandseingabe angewandte, globale Zustandsfunktion die Zwischen-Zustandsausgabe erzeugt.

2. Berechnungsvorrichtung nach Anspruch 1, wobei eine einzelne Iteration der Tabellennetzwerke der Reihe eine Einzeliterationszustandsfunktion auf der globalen Zustandseingabe ermittelt, wobei die Einzeliterationszustandsfunktion idempotent oder nilpotent ist.

3. Berechnungsvorrichtung nach Anspruch 2, wobei die Einzeliterationszustandsfunktion die Identität ist, wobei das Schutz-Tabellennetzwerk so konfiguriert ist, dass es verifiziert, dass die globale Zustandseingabe der Zwischen-Zustandsausgabe entspricht.

4. Berechnungsvorrichtung nach Anspruch 1, wobei das Schutz-Tabellennetzwerk so konfiguriert ist, dass es eine weitere, von der Anzahl von Iterationen von Reihen (133) abhängige Eingabe empfängt.

5. Berechnungsvorrichtung nach Anspruch 1, wobei das Schutz-Tabellennetzwerk weiterhin so konfiguriert ist, dass es als Input empfängt: die Zwischen-Datenausgabe (126) und als Ausgabe ein geschützte Datenausgabe und geschützte Zustandsausgabe (143) erzeugt, wobei
die geschützte Datenausgabe der Zwischen-Datenausgabe entspricht, im Falle die Verifikation erfolgreich ist, und
die geschützte Datenausgabe von der Zwischen-Datenausgabe verschieden ist, im Falle die Verifikation bei mindestens einigen Werten der globalen Dateneingabe und der globalen Zustandseingabe nicht erfolgreich ist.

6. Berechnungsvorrichtung nach Anspruch 1, wobei das Schutz-Tabellennetzwerk ein Zustands-Tabellennetzwerk (130) umfasst, wobei das Zustands-Tabellennetzwerk für die globale Zustandsfunktion konfiguriert und so eingerichtet ist, dass es die Zustandseingabe einer Verifikationszustandsausgabe (132) zuordnet, wobei das Schutz-Tabellennetzwerk so konfiguriert ist, dass es verifiziert, dass die Verifikationszustandsausgabe der Zwischen-Zustandsausgabe entspricht.

7. Berechnungsvorrichtung nach Anspruch 1, wobei das Zustands-Tabellennetzwerk (130) weniger Tabellen als die Reihe von Tabellennetzwerken (110) zusammen umfasst.

8. Berechnungsvorrichtung nach Anspruch 1, wobei sämtliche, einem Tabellennetzwerk der Reihe entsprechende Zustandsfunktionen gleich sind.

9. Berechnungsvorrichtung nach Anspruch 1, wobei

- die globale Dateneingabe und eine globale Zustandseingabe zusammen in eine einzelne globale Eingabe codiert sind,
- die Dateneingabe und die Zustandseingabe eines Tabellennetzwerks der Reihe zusammen in eine einzelne Eingabe codiert sind,
- due Datenausgabe und die Zustandsausgabe eines Tabellennetzwerks der Reihe zusammen in eine einzelne Ausgabe codiert sind,
- die Zwischen-Datenausgabe und die Zwischen-Zustandsausgabe zusammen in eine einzelne Zwischenausgabe codiert sind,
- die geschützte Datenausgabe und die geschützte Zustandsausgabe zusammen in eine einzelne geschützte Ausgabe codiert sind.

10. Berechnungsverfahren (700) unter Verwendung einer Reihe von Tabellennetwerken (110), wobei das Verfahren so konfiguriert ist, dass es eine iterierte Funktion auf einer globalen Dateneingabe (121) und einer globalen Zustandseingabe (121) durch Anwenden von Tabellennetzwerken der Reihe von Tabellennetzwerken berechnet,

- wobei ein Tabellennetzwerk (112, 114) der Reihe für eine entsprechende Datenfunktion und Zustandsfunktion konfiguriert und so eingerichtet wird, dass es eine Dateneingabe (121, 122) einer Datenausgabe (122, 123) gemäß der entsprechenden Datenfunktion zuordnet und gleichzeitig eine Zustandseingabe (121, 122) einer Zustandsausgabe (122, 123) gemäß einer Zustandsfunktion zuordnet,
- wobei gemäß dem Verfahren:
- die Reihe von Tabellennetzwerken, ein Tabellennetzwerk der iterativ angewandten Tabellennetzwerke auf die globale Dateneingabe und globale Zustandseingabe, sowie ein sukzessives Tabellennetzwerk dieser Iteration auf die Datenausgabe und Zustandsausgabe eines vorhergehenden Tabellennetzwerks der Reihe, iterativ angewendet wird (710), wobei das iterierte Anwenden der Reihe eine globale Datenfunktion auf der globalen Dateneingabe ermittelt und eine globale Zustandsfunktion auf der globalen Zustandseingabe ermittelt, wodurch eine Zwischen-Datenausgabe und eine Zwischen-Zustandsausgabe erhalten werden,
- verifiziert wird (720), dass die auf die globale Zustandseingabe angewandte, globale Zustandsfunktion die Zwischen-Zustandsausgabe durch Anwenden eines Schutz-Tabellennetzwerks (150) erzeugt, das so konfiguriert ist, dass es mit der Reihe von Tabellennetzwerken zusammenwirkt, um an Tabellennetzwerken der Reihe vorgenommenen Modifikationen entgegenzuwirken, wobei das Schutz-Tabellennetzwerk so konfiguriert ist, dass es als Input empfängt: die Zwischen-Zustandsausgabe (126) sowie eine globale Zustandseingabe (131), wobei das Schutz-Tabellennetzwerk so konfiguriert ist, dass es verifiziert, dass die auf die globale Zustandseingabe angewandte, globale Zustandsfunktion die Zwischen-Zustandsausgabe erzeugt.

11. Compiler, der so konfiguriert ist, dass er eine Reihe von Datenfunktionen erhält und eine erste Reihe von Tabellennetzwerken (110) sowie ein Schutz-Tabellennetzwerk (150) und einen Computercode erzeugt, wobei die erste Reihe (110) und das Schutz-Tabellennetzwerk (150) zur Speicherung auf einem elektronischen Speicher konfiguriert sind und der Computercode zur Ausführung auf einem mit dem elektronischen Speicher gekoppelten, elektronischen Prozessor konfiguriert ist, wobei der Computercode so konfiguriert ist, dass er eine iterierte Funktion auf einer globalen Dateneingabe (121) und einer globalen Zustandseingabe (121) durch Anwenden von Tabellennetzwerken der Reihe von Tabellennetzwerken berechnet,

- wobei ein Tabellennetzwerk (112, 114) der Reihe für eine entsprechende Datenfunktion der Reihe von Datenfunktionen und Zustandsfunktion konfiguriert und so eingerichtet ist, dass es eine Dateneingabe (121, 122) einer Datenausgabe (122, 123) gemäß der entsprechenden Datenfunktion zuordnet und gleichzeitig eine Zustandseingabe (121, 122) einer Zustandsausgabe (122, 123) gemäß einer Zustandsfunktion zuordnet,
- wobei der Computercode so konfiguriert ist, dass er das Anwenden der Reihe von Tabellennetzwerken, einem Tabellennetzwerk der iterativ angewandten Tabellennetzwerke auf die globale Dateneingabe und globale Zustandseingabe, sowie einem sukzessiven Tabellennetzwerk dieser Iteration auf die Datenausgabe und Zustandsausgabe eines vorhergehenden Tabellennetzwerks der Reihe wiederholt, wobei das iterierte Anwenden der Reihe eine globale Datenfunktion auf der globalen Dateneingabe ermittelt und eine globale Zustandsfunktion auf der globalen Zustandseingabe ermittelt, wodurch eine Zwischen-Datenausgabe und eine Zwischen-Zustandsausgabe erhalten werden,
- wobei das Schutz-Tabellennetzwerk (150) so konfiguriert ist, dass es mit der Reihe von Tabellennetzwerken zusammenwirkt, um an Tabellennetzwerken der Reihe vorgenommenen Modifikationen entgegenzuwirken, wobei das Schutz-Tabellennetzwerk so konfiguriert ist, dass es als Input empfängt: die Zwischen-Zustandsausgabe (126) sowie eine globale Zustandseingabe (131), wobei das Schutz-Tabellennetzwerk so konfiguriert ist, dass es verifiziert, dass die auf die globale Zustandseingabe angewandte, globale Zustandsfunktion die Zwischen-Zustandsausgabe erzeugt.

12. Computerprogramm mit Computerprogrammcodemitteln, die so eingerichtet sind, dass sie sämtliche Schritte nach Anspruch 10 ausführen, wenn das Computerprogramm auf einem Computer abläuft.

13. Computerprogramm nach Anspruch 11 oder 12, das auf einem computerlesbaren Medium gespeichert ist.


**Revendications**

1. Dispositif informatique (500) comprenant une mémoire électronique (510) et un processeur électronique (550) couplé à la mémoire, la mémoire stockant une série de réseaux de tableaux (110), le processeur étant configuré pour calculer une fonction itérée sur une entrée de données globales (121) et une entrée d'état global (121) en appliquant des réseaux de tableaux de la série de réseaux de tableaux,

- un réseau de tableaux (112, 114) de la série étant configuré pour une fonction de données correspondante et une fonction d'état correspondante et étant configuré pour mapper une entrée de données (121, 122) sur une sortie de données (122, 123) conformément à la fonction de données correspondante et mapper simultanément une entrée d'état (121, 122) à une sortie d'état (122, 123) conformément à une fonction d'état,
- le processeur électronique étant configuré pour itérer l'application de la série de réseaux de tableaux, un réseau de tableaux des réseaux de tableaux appliqués de manière itérative à l'entrée de données globales et à l'entrée d'état global et un réseau de tableaux successifs de ladite itération à la sortie de données et à la sortie d'état d'un réseau de tableaux précédent de la série, l'application itérée de la série déterminant une fonction de données globales sur l'entrée de données globales et déterminant une fonction d'état global sur l'entrée de données globales, obtenant de la sorte une sortie de données intermédiaires et une sortie d'état intermédiaire,
- la mémoire électronique stockant en outre un réseau de tableaux de protection (150) configuré pour coopérer avec la série de réseaux de tableaux pour répondre aux modifications faites aux réseaux de tableaux de la série, le réseau de tableaux protecteurs étant configuré pour recevoir comme sortie l'état intermédiaire (126) et une entrée d'état global (131), le réseau de tableaux protecteurs étant configuré pour vérifier que la fonction d'état global appliquée à l'entrée d'état global produit la sortie d'état intermédiaire.

2. Dispositif informatique selon la revendication 1, dans lequel une seule itération des réseaux de tableaux de la série détermine une seule fonction d'état d'itération sur l'entrée d'état global, la fonction d'état d'itération unique étant idempotente ou nilpotente.

3. Dispositif informatique selon la revendication 2, dans lequel la fonction d'état d'itération unique est l'identité, le réseau de tableaux de protection étant configuré pour vérifier que l'entrée d'état global est égale à la sortie d'état intermédiaire.

4. Dispositif informatique selon la revendication 1, dans lequel le réseau de tableaux de protection est configuré pour recevoir une autre entrée dépendant du nombre d'itérations de la série (133).

5. Dispositif informatique selon la revendication 1, dans lequel le réseau de tableaux de protection est en outre configuré pour recevoir comme entrée la sortie de données intermédiaires (126) et produire comme sortie une sortie de données protégées et une sortie d'état protégé (143), dans lequel

  - la sortie de données protégées est égale à la sortie de données intermédiaires dans le cas où la vérification est couronnée de succès et la sortie de données protégées n'est pas égale à la sortie de données intermédiaires dans le cas où la vérification n'est pas couronnée de succès pour au moins certaines valeurs de l'entrée de données globales et de l'entrée d'état global.

6. Dispositif informatique selon la revendication 1, dans lequel le réseau de tableaux de protection comprend un réseau de tableaux d'état (130), le réseau de tableaux d'état étant configuré pour la fonction d'état global et étant configuré pour mapper l'entrée d'état avec une sortie d'état de vérification (132), le réseau de tableaux de protection étant configuré pour vérifier que la sortie d'état de vérification est égale à la sortie d'état intermédiaire.

7. Dispositif de calcul selon la revendication 6, dans lequel le réseau de tableaux d'état (130) comprend moins de tableaux que la série de réseaux de tableaux (110) conjointement.

8. Dispositif informatique selon la revendication 1, dans lequel toutes les fonctions d'état correspondant à un réseau de tableaux de la série sont égales.

9. Dispositif informatique selon la revendication 1, dans lequel

  - l'entrée de données globales et l'entrée d'état global sont codées conjointement en une entrée globale unique,
  - l'entrée de données et l'entrée d'état d'un réseau de tableaux de la série sont codées conjointement en une entrée unique,
  - la sortie de données et la sortie d'état d'un réseau de tableaux de la série sont codées conjointement en une sortie unique,
  - la sortie de données intermédiaires et la sortie d'état intermédiaire sont codées conjointement en une sortie intermédiaire unique,
  - la sortie de données protégées et la sortie d'état protégé sont codées conjointement en une sortie protégée unique.

10. Procédé informatique (700) utilisant une série de réseaux de tableaux (110), le procédé étant configuré pour calculer une fonction itérée sur une entrée de données globales (121) et sur une entrée d'état global (121) en appliquant des réseaux de tableaux de la série de réseaux de tableaux,

- un réseau de tableaux (112, 114) de la série étant configuré pour une fonction de données correspondante et une fonction d'état correspondante et étant configuré pour mapper une entrée de données (121, 122) sur une sortie de données (122, 123) conformément à la fonction de données correspondante et pour mapper simultanément une entrée d'état (121, 122) sur une sortie d'état (122, 123) conformément à une fonction d'état,
- le procédé comprenant
- une application itérative (710) de la série de réseaux de tableaux, un réseau de tableaux des réseaux de tableaux appliqué de manière itérative à l'entrée de données globales et à l'entrée d'état global et un réseau de tableaux successifs de ladite itération à la sortie de données et à la sortie d'état d'un réseau de tableaux précédent de la série, l'application itérée de la série déterminant une fonction de données globales sur l'entrée de données globales et déterminant une fonction d'état global sur l'entrée d'état global, obtenant de la sorte une sortie de données intermédiaires et une sortie d'état intermédiaire,
- la vérification (720) que la fonction d'état global appliquée à l'entrée d'état global produit la sortie d'état intermédiaire en appliquant un réseau de tableaux de protection (150) configuré pour coopérer avec la série de réseaux de tableaux pour répondre aux modifications faites aux réseaux de tableaux de la série, le réseau de tableaux de protection étant configuré pour recevoir comme entrée la sortie d'état intermédiaire (126) et une entrée d'état global (131), le réseau de tableaux de protection étant configuré pour vérifier que la fonction d'état global appliquée à l'entrée d'état global produit la sortie d'état intermédiaire.

11. Compilateur configuré pour obtenir une série de fonctions de données et pour produire une première série de réseaux de tableaux (110) et un réseau de tableaux de protection (150) et un code d'ordinateur, la première série (110) et le réseau de tableaux de protection (150) étant configurés pour un stockage sur une mémoire électronique et le code d'ordinateur étant configuré pour une exécution sur un processeur électronique couplé à la mémoire électronique, le code d'ordinateur étant configuré pour calculer une fonction itérée sur une entrée de données globales (121) et une entrée d'état global (121) en appliquant des réseaux de tableaux de la série de réseaux de tableaux,

- un réseau de tableaux (112, 114) de la série étant configuré pour une fonction de données correspondante de la série de fonctions de données et une fonction d'état et est configuré pour mapper une entrée de données (121, 122) sur une sortie de données (122, 123) conformément à la fonction de données correspondante et pour mapper simultanément une entrée d'état (121, 122) sur une sortie d'état (122, 123) conformément à une fonction d'état,
- le code d'ordinateur étant configuré pour itérer l'application de la série de réseaux de tableaux, un réseau de tableaux des réseaux de tableaux appliqué de manière itérative à l'entrée de données globales et à l'entrée d'état global et un réseau de tableaux successifs de ladite itération avec la sortie de données et la sortie d'état d'un réseau de tableaux précédent de la série, l'application itérée de la série déterminant une fonction de données globales sur l'entrée de données globales et déterminant une fonction d'état global sur l'entrée d'état global, obtenant de la sorte une sortie de données intermédiaires et une sortie d'état intermédiaire,
- le réseau de tableaux de protection (150) étant configuré pour coopérer avec la série de réseaux de tableaux pour répondre aux modifications faites aux réseaux de tableaux de la série, le réseau de tableaux de protection étant configuré pour recevoir comme entrée la sortie d'état intermédiaire (126) et une entrée d'état global (131), le réseau de tableaux de protection étant configuré pour vérifier que la fonction d'état global appliquée à l'entrée d'état global produit la sortie d'état intermédiaire.

12. Programme d'ordinateur comprenant des moyens à code de programme d'ordinateur adaptés pour effectuer toutes les étapes de la revendication 10 lorsque le programme d'ordinateur tourne sur un ordinateur.

13. Programme d'ordinateur selon la revendication 11 ou 12 mis en oeuvre sur un support lisible par ordinateur.

*Fig. 1a*

131  160  121  112  122  110

130  132  140

*Fig. 1b*

*Fig. 2*

*Fig. 3*

*Fig. 4*

*Fig. 5*

<u>600</u>

```
┌─────────────────────┐
│                 610 │
│                     │
└─────────────────────┘
          │
          ▼
┌─────────────────────┐
│                 620 │
│                     │
└─────────────────────┘
          │
          ▼
┌─────────────────────┐
│                 630 │
│                     │
└─────────────────────┘
          │
          ▼
┌─────────────────────┐
│                 640 │
│                     │
└─────────────────────┘
          │
          ▼
┌─────────────────────┐
│                 655 │
│                     │
└─────────────────────┘
```

Fig. 6

<u>700</u>

```
┌─────────────────────┐
│                 710 │◄───┐
│                     │    │
└─────────────────────┘    │
          │                │
          ▼────────────────┘
┌─────────────────────┐
│                 720 │
│                     │
└─────────────────────┘
```

Fig. 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 8161463 B2, H. Johnson
- US 2012300922 A1, O. Billet
- US 61740691 B
- EP 12199387 A
- EP 13156302 A

**Non-patent literature cited in the description**

- **S. CHOW ; P. EISEN ; H. JOHNSON ; P.C. VAN OORSCHOT.** *White-Box Cryptography and an AES Implementation*
- **R. KARRI.** Concurrent Error Detection Schemes for Fault-Based Side-Channel Cryptanalysis of Symmetric Block Ciphers. *IEEE Transaction on Computer Aided Design of Integrated Circuits and Systems,* 2002